# EUROPÄISCHE PATENTSCHRIFT

(11) **EP 3 816 570 B1**
(45) Veröffentlichungstag und Bekanntmachung des Hinweises auf die Patenterteilung: **11.03.2026**
(21) Anmeldenummer: 20201692.9
(22) Anmeldetag: 14.10.2020
(51) Int. Cl.: F41G 7/22, G06T 7/70, G05D 1/00, G06F 18/25, G06T 1/00, G06V 10/80, G06V 20/10

(54) **BILDVERARBEITUNGSVERFAHREN ZUM ERMITTELN VON LENKBEFEHLEN FÜR STEUERFLÜGEL EINES LENKFLUGKÖRPERS**
IMAGE PROCESSING METHOD FOR DETERMINING STEERING COMMANDS FOR CONTROL SURFACES OF A GUIDED MISSILE
PROCÉDÉ DE TRAITEMENT DES IMAGES POUR DÉTERMINER DES ORDRES DE TANGAGE POUR LES AILES DE COMMANDE D'UN ENGIN GUIDÉ

(30) Priorität: 29.10.2019 DE 102019007515
(43) Veröffentlichungstag der Anmeldung: 05.05.2021
(73) Patentinhaber: Diehl Defence GmbH & Co. KG, 88662 Überlingen (DE)
(72) Erfinder: Selz, Andre, 88662 Überlingen (DE); Kühn, Marc-Oliver, 78465 Konstanz (DE); Kushauer, Jörg, 88693 Deggenhausertal (DE)
(74) Vertreter: Diehl Patentabteilung

(56) Entgegenhaltungen:
- DE-T2- 69 205 481
- US-A- 5 341 142
- US-A1- 2014 231 650

## Beschreibung

Die Erfindung betrifft ein Bildverarbeitungsverfahren zum Ermitteln von Lenkbefehlen für Steuerflügel eines Lenkflugkörpers.

Lenkflugkörper mit einem bildgebenden System haben die Aufgabe, ein Ziel zu erkennen und dieses selbständig anzufliegen. Um ein weit entferntes Ziel erkennen zu können, ist neben einer hoch auflösenden Optik auch eine sehr leistungsstarke Bildverarbeitung notwendig, um die Daten eines hochauflösenden Bildsensors schnell bearbeiten zu können. Zudem muss ein solcher Lenkflugkörper agil sein, um ein ausweichendes Ziel zuverlässig verfolgen zu können. Um Schnelligkeit zu erreichen, muss die Bildverarbeitung sehr schnell arbeiten, um Erkennungsverzögerungen kurz zu halten. Diese Vorgaben stellen hohe Anforderungen an die Hardware der Bildverarbeitung, die möglichst klein ausgeführt sein muss, um den Lenkflugkörper klein bauen zu können.

Zum Erreichen dieser Ziele ist die Hardware eines bildverarbeitenden Systems eines Lenkflugkörpers im Zusammenspiel mit der verwendeten Software hoch optimiert, um ein exakt auf die zu bewältigenden Aufgaben ausgerichtetes und kleines System zu erreichen. Die einzelnen Bildverarbeitungsschritte - von der Objekterkennung im Bild, der Koordinatenermittlung des Objekts bis zur Objektklassifikation - sind optimiert hintereinander geschaltet und zeitlich starr zueinander getaktet, um durch den Bearbeitungstakt die zur Verfügung stehende Hardware optimal auszunutzen.

Aus der DE 692 05 481 T ist ein Verfahren zur Selbstlenkung eines Flugkörpers gegen ein Ziel mittels Entfernungsmessungen bekannt. Der Flugkörper umfasst hierfür eine Erkennungs- und Verfolgungseinheit, bei welcher ein gemeinsamer Datenbus Speicher, eine Kontroll- und Recheneinheit sowie verschiedene Operatoren miteinander verbindet. Von einem Infrarot-Detektor gelieferte Bilder werden von den Operatoren und der Kontroll- und Recheneinheit verarbeitet.

Die US 5 341 142 A beschäftigt sich mit einem automatischen Zielerfassungs- und - verfolgungssystem für einen Focal-Plane-Array-Sucher. Die automatische Zielerfassung wird durch drei unabhängige Zielerfassungsalgorithmen erreicht, nämlich die Maximum-Likelihood-Klassifizierung, das räumliche Video-Clustering und das Ziel-zu-Interferenz-Verhältnis. Jeder Algorithmus arbeitet asynchron und liefert unabhängige Zielerkennungsergebnisse. Zielinformationen werden dann hierarchisch probabilistisch kombiniert und priorisiert. Das Ziel mit der höchsten Priorität wird an einen Dualmodus-Tracker übergeben, der aus einem minimalen absoluten Differenzkorrelations-Tracker und einem Schwerpunkt-Tracker besteht. Der Dual-Mode-Tracker liefert anschließend ein Feedback-Signal an ein proportionales Navigationssystem oder ein anderes Leit-/Steuerungssystem, um die Flugbahn einer Munition zu lenken.

Es ist eine Aufgabe der vorliegenden Erfindung, ein Bildverarbeitungsverfahren zum Ermitteln von Lenkbefehlen für Steuerflügel eines Lenkflugkörpers anzugeben, das hinsichtlich seiner Einsatzfähigkeit gegenüber bekannten Systemen weiter verbessert ist.

Diese Aufgabe wird durch ein Bildverarbeitungsverfahren gemäß den Merkmalen von Patentanspruch 1 gelöst, bei dem unter anderem eine Kamera eine Umgebung aufnimmt, aus der Aufnahme einen Bilddatensatz erzeugt und den Bilddatensatz an einem Datenbus zur Verfügung stellt, mehrere an den Datenbus angeschlossene Bildbearbeitungseinheiten an dem Datenbus zur Verfügung stehende Daten bearbeiten und ihre Arbeitsergebnisse am Datenbus zur Verfügung stellen, eine Datenfusion die dem Bilddatensatz zugeordneten Arbeitsergebnisse zu einem Hauptergebnis zusammenfasst und ein Autopilot aus dem Hauptergebnis Lenkbefehle für die Steuerflügel berechnet.

Durch die Anordnung der Bildbearbeitungseinheiten an einem Datenbus können die Bildbearbeitungseinheiten flexibel an den jeweiligen Einsatz des Lenkflugkörpers angepasst werden, indem die entsprechende Bildbearbeitungseinheit angeschlossen und verwendet wird. Die Bildverarbeitung kann einfach spezialisiert werden, wodurch Hardware-Ressourcen einsatzspezifisch optimiert genutzt werden können. Außerdem kann der Vorteil erreicht werden, dass für eine Bildbearbeitungseinheit Bearbeitungszeiten länger als bei einer starren Taktung gewährt werden, sodass rechenintensive Spezialaufgaben hardwareschonend bewerkstelligt werden können.

Der Lenkflugkörper ist zweckmäßigerweise ein unbemanntes Fluggerät mit einem Suchkopf und einem Steuersystem, das zur selbständigen Lenkung des Lenkflugkörpers anhand einer Zielführung vorbereitet ist. Der Lenkflugkörper enthält beispielsweise einen Wirkkörper zur Bekämpfung eines Ziels durch eine Detonation. Die Kamera ist zweckmäßigerweise Teil eines Suchkopfs des Lenkflugkörpers und enthält vorteilhafterweise eine Optik zur Fokussierung einer Umgebungsstrahlung auf einen Detektor der Kamera. Zweckmäßigerweise ist die Optik eine Infrarotoptik und der Detektor ein Infrarotdetektor.

Aus einer Aufnahme erzeugt die Kamera einen Bilddatensatz. Dieser kann ein Bild der Umgebung enthalten oder anders zusammengestellte Daten, aus denen beispielsweise ein Bild der Umgebung erzeugt werden kann. Die Kamera ist am Datenbus angeschlossen, an dem auch die Bildbearbeitungseinheiten und auch die Datenfusion angeschlossen sind. Die Datenfusion ist eine Einheit, die aus den Arbeitsergebnissen der Bildbearbeitungseinheiten das Hauptergebnis berechnet.

Die Kamera nimmt die Umgebung zweckmäßigerweise mehrfach hintereinander auf.

Aus mehreren oder jeder Aufnahme wird jeweils ein Bilddatensatz erzeugt, sodass diese hintereinander am Datenbus zur Verfügung gestellt werden können. Der beziehungsweise die Bilddatensätze können von einer oder mehreren Bildbearbeitungseinheiten zeitgleich oder hintereinander abgerufen und bearbeitet werden.

Die Bildbearbeitungseinheiten bearbeiten die an dem Datenbus zur Verfügung stehenden Daten. Das kann der Bilddatensatz sein oder ein aus dem Bilddatensatz Arbeitsergebnis einer der Bildbearbeitungseinheiten. Zweckmäßigerweise wird der Bilddatensatz von einer Bildbearbeitungseinheit zu einem Arbeitsergebnis bearbeitet und eine zweite Bildbearbeitungseinheit greift das Arbeitsergebnis auf und bearbeitet es zu ihrem Arbeitsergebnis. Optional kann eine oder mehrere weitere Bildbearbeitungseinheiten das jeweils letzte Arbeitsergebnis aufgreifen und weiter bearbeiten. Zu einem Bilddatensatz können so aufeinander aufbauende Arbeitsergebnisse zeitlich hintereinander oder zeitgleich am Datenbus zur Verfügung stehen. Es ist aber auch möglich, dass mehrere Bildbearbeitungseinheiten an einem Bilddatensatz oder einem gleichen Arbeitsergebnis arbeiten und unterschiedliche Arbeitsergebnisse am Datenbus zur Verfügung stellen.

Die Datenfusion fasst mehrere Arbeitsergebnisse zu einem Hauptergebnis zusammen.

Das Hauptergebnis kann Arbeitsergebnisse einer oder mehrerer Bildbearbeitungseinheiten oder nur Teile daraus enthalten. Das Hauptergebnis ist so ausgestaltet, dass es als Eingangsdaten den Autopiloten zur Berechnung von Lenkbefehlen für die Steuerflügel befähigt. Unter Verwendung der Lenkbefehle kann der Lenkflugkörper auf ein Ziel zu gesteuert werden, vorteilhafterweise selbständig. Bei mehreren Bilddatensätzen fasst die Datenfusion zweckmäßigerweise einem einzigen Bilddatensatz zugeordnete Arbeitsergebnisse zu einem Hauptergebnis zusammen und führt diesen Prozess für mehrere oder alle Bilddatensätze durch.

In einer vorteilhaften Ausführungsform der Erfindung extrahiert eine der Bildbearbeitungseinheiten aus dem Bilddatensatz zumindest ein Objekt. Die Bildbearbeitungseinheit ist insofern dazu vorbereitet, aus dem Bilddatensatz ein oder mehrere Objekte zu erkennen, also als Objekte zu klassifizieren. Hierzu können Eigenschaften des Objekts vorgegeben sein, die die das Objekt beschreibenden Bilddaten erfüllen müssen, damit eine Abbildung als ein Objekt klassifiziert wird. Die am Datenbus anliegenden Arbeitsergebnisse enthalten daher vorteilhafterweise ein aus dem Bilddatensatz extrahiertes Objekt.

Weiter ist es vorteilhaft, wenn eine der Bildbearbeitungseinheiten dazu vorbereitet ist, die Koordinaten des Objekts zu bestimmen. Die Koordinaten sind zweckmäßigerweise bezogen auf eine flugkörperfeste Richtung, beispielsweise die Flugkörperachse. Die am Datenbus zur Verfügung stehenden Arbeitsergebnisse enthalten insofern vorteilhafterweise die Koordinaten des Objekts.

Um ein anzufliegendes Ziel von anderen Bildobjekten zu unterscheiden und als solches zu klassifizieren, ist es vorteilhaft, wenn eine der Bildbearbeitungseinheiten dazu vorbereitet ist, eine Klassifikation des Objekts vorzunehmen, wobei zumindest eine der zur Verfügung stehenden Klassen ein anzufliegendes Ziel ist. Die am Datenbus zur Verfügung stehenden Arbeitsergebnisse enthalten insofern vorteilhafterweise eine Klassifikation des Objekts.

Bei der Berechnung von Steuerbefehlen für den Autopiloten ist es zweckmäßig, wenn die Zeitspanne vom Aufnahmezeitpunkt bis zum Zeitpunkt der Bereitstellung des Hauptergebnisses für den Autopilot bekannt ist. Denn dann ist bekannt, wann sich das anzufliegende Ziel an welchen Koordinaten befand. Die Berechnung der Lenkbefehle wird zudem erheblich vereinfacht, wenn die Zeitspanne zwischen den beiden Zeitpunkten stets konstant ist. Auf diese Weise kann der Autopilot die richtigen Lenkbefehle in stets gleicher Weise berechnen. Von daher ist es vorteilhaft, wenn die Datenfusion zu mehreren Bilddatensätzen das Hauptergebnis nach der stets gleichen Zeitspanne nach der Aufnahme an den Autopiloten weiterleitet. Die Größe der Zeitspanne ist zweckmäßigerweise bekannt.

Ebenfalls der Einfachheit der Berechnung der Lenkbefehle ist es dienlich, wenn die Zeitabstände zwischen zwei dem Autopiloten zur Verfügung gestellten Hauptergebnissen immer gleich sind. Dies kann erreicht werden, wenn die Datenfusion zu mehreren Bilddatensätzen die Hauptergebnisse regelmäßig getaktet an den Autopiloten weiterleitet.

Die Verarbeitung der Daten des Bilddatensatzes zu einem Arbeitsergebnis und die darauffolgende Verarbeitung des Arbeitsergebnisses zu einem darauf aufbauenden weiteren Arbeitsergebnis und so weiter kann streng sukzessive erfolgen. Eine höhere Flexibilität der Berechnung der Arbeitsergebnisse kann jedoch erreicht werden, wenn mehrere Bildbearbeitungseinheiten, beispielsweise alle Bildbearbeitungseinheiten, Zugriff auf den Bilddatensatz und/oder zumindest Arbeitsergebnisse zumindest einer anderen Bildbearbeitungseinheit haben. Maximaler Datenzugriff kann erreicht werden, wenn alle Bildbearbeitungseinheiten Zugriff sowohl auf den Bilddatensatz als auch auf die von anderen Bildbearbeitungseinheiten bereitgestellten Arbeitsergebnisse haben.

Um die Zeitspanne zwischen Aufnahmezeitpunkt und Bereitstellung des Hauptergebnisses am Autopiloten stets berechnen zu können, ist es vorteilhaft, wenn jeder Bilddatensatz eine eindeutige Identifikationskennzeichnung enthält. Diese kann ein Zeitstempel sein. Bei einer bekannt getakteten Eingabe der Bilddatensätze durch die Kamera auf den Datenbus kann die Identifikationskennzeichnung auch eine Nummer oder eine nicht direkt mit einer Zeit in Verbindung stehende Kennzeichnung sein. Hierbei ist es sinnvoll, wenn die Taktung auch der Datenfusion zur Verfügung steht, sodass sie aus der Identifikation den Zeitpunkt bestimmen kann, zu dem das Hauptergebnis dem Autopiloten zur Verfügung gestellt werden soll.

Um die Zeitspanne zwischen Aufnahmezeitpunkt und Übergabe des Hauptergebnisses an den Autopiloten stets einzuhalten, ist gemäß der Erfindung vorgesehen, dass zu mehreren Aufnahmen jeweils ein Bilddatensatz zur Verfügung gestellt wird, jeder Bilddatensatz eine vorbestimmte und gleiche Zeitspanne zur Bearbeitung am Datenbus zur Verfügung steht. Zum Ende der Zeitspanne schließt die Datenfusion entsprechend der Erfindung ein zeitliches Bearbeitungsfenster des Bilddatensatzes und/oder der daraus erarbeiteten Arbeitsergebnisse am Datenbus. Aus den bis dahin vorliegenden Arbeitsergebnissen wird das Hauptergebnis erstellt und an den Autopiloten übergeben.

Es kann jedoch sinnvoll sein, dass zumindest eine der Bildbearbeitungseinheiten eine Weiterarbeit an einem Bilddatensatz und/oder einem Arbeitsergebnis gestattet wird. Beispielsweise wird eine Objektklassifikation nicht von Aufnahme zu Aufnahme verschieden sein, sodass an der Klassifikation auch dann noch gerechnet werden kann, wenn das Bearbeitungsfenster zum betreffenden Bilddatensatz bereits geschlossen ist. Die Klassifikation kann dann nachgeliefert werden, ohne dass dies die Lenkung störend beeinflussen würde.

Erfindungsgemäß beendet das Schließen des Bearbeitungsfensters die Bearbeitung der Daten zu einem Bilddatensatz nur für einen Teil der Bildbearbeitungseinheiten, wohingegen zumindest eine der Bildbearbeitungseinheiten die Bearbeitung an den Daten fortsetzt.

Häufig liegt ein Bilddatensatz vor, aus dem nicht genügend Daten zur Lenkung des Lenkflugkörpers ermittelt werden können. Beispielsweise ist kein Ziel klassifizierbar. Insbesondere in einer solchen Situation ist es vorteilhaft, wenn die Datenfusion nach dem Schließen eines Bearbeitungsfensters prüft, ob die Arbeitsergebnisse zu einem Bilddatensatz ausreichen, um vordefiniert genügende Lenkbefehle abzuleiten. Bei negativem Prüfungsergebnis kann die Datenfusion die Arbeitsergebnisse verwerfen. Der Lenkflugkörper kann dann beispielsweise unverändert weiterfliegen oder nach anderen Kriterien gelenkt werden.

Je nach Flugsituation kann es vorkommen, dass die Ermittlung eines der Arbeitsergebnisse besonders hohen Rechenaufwand verlangt, wohingegen die Ermittlung eines anderen Arbeitsergebnisses mit unterdurchschnittlichem Rechenaufwand auskommt. Um in einem solchen Fall die Hardwareressourcen an notwendigen Rechenaufwand anpassen zu können, ist es vorteilhaft, wenn die Datenfusion die Arbeitsergebnisse auf Güte prüft und den Bildbearbeitungseinheiten anhand der Güte Hardwareressourcen zuteilt.

Bei einer bisher üblichen starren Taktung der Auswertungskette zwischen Kamera und Autopilot war die Kamera gezwungen, ihre Bilddatensätze starr getaktet auszugeben. Bei schlechten Beleuchtungsverhältnissen konnte das dazu führen, dass die Integrationszeit zu kurz war, um für eine Lenkung ausreichend auswertbare Bilder zu erzielen. Durch das flexiblere Bussystem kann dieser Nachteil umgangen werden. Hierfür kann vorteilhafterweise ein Belichtungsprüfer vorhanden sein, der die Beleuchtungsverhältnisse prüfen kann, beispielsweise anhand eines von der Kamera ausgegebenen Bilddatensatzes. Um auswertbare Bilddatensätze zu bekommen, ist es insofern vorteilhaft, wenn die Integrationszeit der Kamera für die Aufnahmen unter Verwendung eines Belichtungsprüfers gesteuert wird, der die Bilddaten auswertet.

Die Erfindung ist außerdem gerichtet auf eine Flugkörpersteuereinheit für einen Lenkflugkörper gemäß Patentanspruch 10, umfassend eine Kamera. Um eine verbesserte Einsatzfähigkeit der Flugkörpersteuereinheit zu erreichen, umfasst diese einen mit der Kamera verbundenen Datenbus, mehrere Bildbearbeitungseinheiten am Datenbus, eine Datenfusion und einen Autopiloten. Hierbei ist die Kamera dazu vorbereitet, eine Umgebung aufzunehmen, aus der Aufnahme einen Bilddatensatz zu erzeugen und den Bilddatensatz am Datenbus zur Verfügung zu stellen. Die Bildbearbeitungseinheiten sind dazu vorbereitet, an dem Datenbus zur Verfügung stehende Daten zu bearbeiten und die Arbeitsergebnisse am Datenbus zur Verfügung zu stellen. Die Datenfusion ist dazu vorbereitet, die Arbeitsergebnisse zu einem Hauptergebnis zusammenzufassen, und der Autopilot ist dazu vorbereitet, aus dem Hauptergebnis Lenkbefehle für Steuerflügel des Lenkflugkörpers zu berechnen.

Je nach Einsatz können sich die Anforderungen an Lenkflugkörper erheblich voneinander unterscheiden. Dies kann sich in den Anforderungen an die Auswertung der Bilddatensätze niederschlagen und damit an die Anforderungen der Bildbearbeitungseinheiten. Durch die Erfindung kann hierauf flexibel reagiert werden, da Bildbearbeitungseinheiten einfach austauschbar sind, ohne dass die übrigen Komponenten verändert werden müssen.

Es ist daher vorteilhaft, wenn bei einem Flugkörpersteuerungssystem mit zumindest zwei Flugkörpersteuerungseinheiten diese beiden Flugkörpersteuerungseinheiten hinsichtlich Kamera, Datenbus, Datenfusion und Autopilot identisch sind und sich in zumindest einer Bildbearbeitungseinheit voneinander unterscheiden.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, so dass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung eines Ausführungsbeispiels, das im Zusammenhang mit den Zeichnungen näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale.

Es zeigen:
- FIG 1: einen Lenkflugkörper zum Verfolgen eines sich bewegenden Ziels,
- FIG 2: ein Schema eines Datenbusses mit mehreren daran angeschlossenen Bildbearbeitungseinheiten und einer Datenfusion vor einem Autopiloten und
- FIG 3: ein Schema mit mehreren Verarbeitungstakten zu mehreren Bilddatensätzen und daraus resultierenden Arbeitsergebnissen.

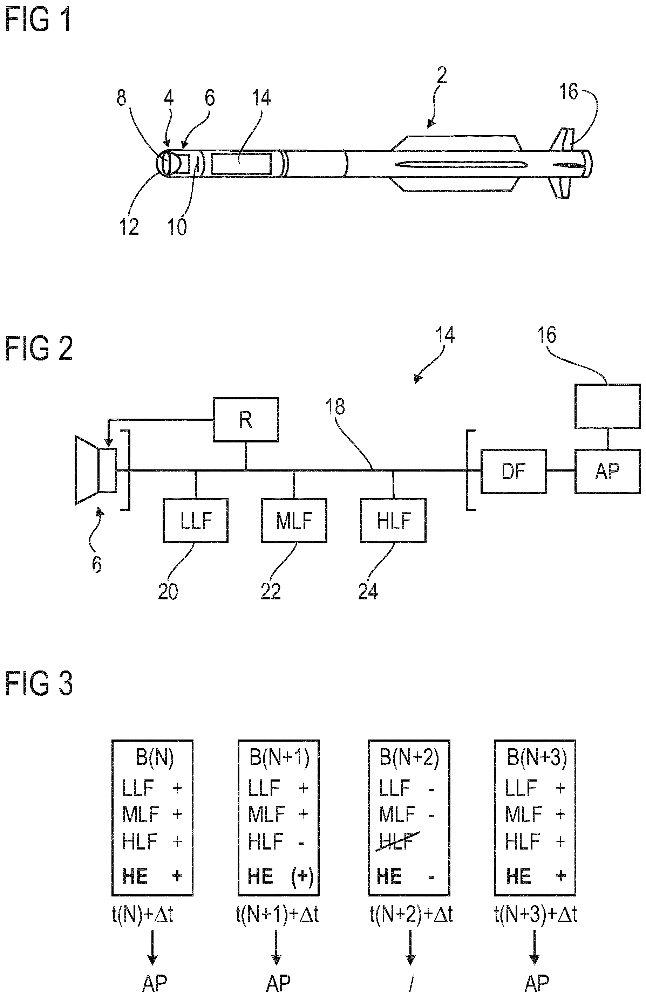

FIG 1 zeigt einen Lenkflugkörper 2 mit einem Suchkopf 4, der eine Kamera 6 mit einer Optik 8 zum Abbilden einer Objektszene auf einen Matrixdetektor 10 enthält. Zum Schutz der Kamera 6 ist der Suchkopf 4 nach vorne hin durch einen Dom mit einem optischen Fenster 12 verschlossen. Eine mit der Kamera 6 signaltechnisch verbundene Flugkörpersteuereinheit 14 lenkt den Flug des Lenkflugkörpers 2, indem sie aus Bildsignalen der Kamera 6 Lenkbefehle ableitet und hiermit Steuerflügel 16 ansteuert.

Zum Anfliegen auf das Ziel wurde der Lenkflugkörper 2 auf das Ziel eingewiesen, z.B. durch eine Plattform, von der er gestartet wurde, oder er hat das Ziel selbständig erfasst. Mithilfe der Kamera verfolgt der Lenkflugkörper 2 das Ziel, indem er mit seiner auf das Ziel ausgerichteten Kamera 6 Aufnahmen vom Ziel macht, in den Aufnahmen das Ziel als solches erkennt und auf das Ziel zu fliegt.

FIG 2 zeigt die zur Ansteuerung verwendete Flugkörpersteuereinheit 14 in einer schematischen Art und Weise. Die Kamera 6 ist signaltechnisch mit einem Datenbus 18 verbunden, mit dem außerdem drei Bildbearbeitungseinheiten 20, 22, 24, ein rückkoppelnder Sensor R und eine Datenfusion DF verbunden sind. Die Datenfusion DF ist mit einem Autopiloten AP verbunden, der nicht dargestellte Aktuatoren ansteuert, mit denen die Steuerflügel 16 bewegt werden.

Die Kamera 6 macht während des Anflugs auf das Ziel eine Vielzahl von Aufnahmen und erzeugt aus den Daten des Matrixdetektors 10 zu jeder Aufnahme einen Bilddatensatz B (siehe FIG 3), den sie am Datenbus 18 zur Verfügung stellt. Die Aufnahmen können regelmäßig getaktet gemacht werden und die Bilddatensätze B können regelmäßig getaktet am Datenbus 18 zur Verfügung gestellt werden. Jeder Bilddatensatz B trägt ein eindeutige Identifikationskennzeichnung, beispielsweise einen Zeitstempel oder eine fortlaufende Nummer. Bei dem Beispiel aus FIG 3 wird eine fortlaufende Nummer verwendet, und es sind vier unmittelbar nacheinander an den Datenbus 18 gestellte Bilddatensätze B mit den Nummern N, N+1, N+2 und N+3 dargestellt.

Die Bildbearbeitungseinheiten 20, 22, 24 greifen selbständig auf die am Datenbus 18 anliegenden beziehungsweise zur Verfügung gestellten Daten zu und bearbeiten diese zu Arbeitsergebnissen, die sie wieder am Datenbus 18 zur Verfügung stellen. Die Arbeitsergebnisse sind in FIG 3 mit "+" oder "-" gekennzeichnet. Die Arbeitsergebnisse sind jeweils mit der Identifikationskennzeichnung versehen, die von dem Bilddatensatz stammt, von dem die Arbeitsergebnisse abgeleitet wurden. Auf diese Weise können alle Arbeitsergebnisse zu einem Bilddatensatz als zusammengehörig aufgefunden werden. Aus den aus einem Bilddatensatz B erarbeiteten Arbeitsergebnissen erzeugt die Datenfusion DF ein Hauptergebnis HE, anhand dessen der Autopilot Lenkbefehle an die Steuerflügel 16 beziehungsweise deren Aktuatoren berechnet.

Zu einem Zeitpunkt t(N) liefert die Kamera 6 den Bilddatensatz B(N) in den Datenbus 18. Dieser wird entweder allen Bildbearbeitungseinheiten 20, 22, 24 zugeführt oder diese greifen auf ihn zu, wenn sie entsprechend ihrer Software seine Daten verarbeiten sollen. Der Bilddatensatz B wird von einer oder mehrerer der Bildbearbeitungseinheiten 20, 22, 24 bearbeitet. Wie die Bearbeitung erfolgt, kann von der Art des Lenkflugkörpers 2 und/oder dessen Mission abhängig gemacht werden. Im gezeigten Ausführungsbeispiel kann der Bilddatensatz B erst von der Bildbearbeitungseinheit 20 bearbeitet werden, die eine sogenannte Low Level Function ist und aus dem Bilddatensatz B mittels bildverarbeitender Methoden ein oder mehrere Objekte extrahiert. Informationen zu dem oder diesen Objekten, beispielsweise es charakterisierende Bilddaten und/oder dessen Lage im Bild, werden als Arbeitsergebnisse von der Bildbearbeitungseinheit 20 am Datenbus 18 zur Verfügung gestellt.

Diese Arbeitsergebnisse werden von der zweiten Bildbearbeitungseinheit 22 aufgenommen und zu weiteren Arbeitsergebnissen bearbeitet, beispielsweise die Lage des Objekts relativ zu Längsachse des Lenkflugkörpers 2. Auch diese Information wird wieder am Datenbus 18 zur Verfügung gestellt. Die weitere Bildbearbeitungseinheit 24 kann die Bilddaten und/oder die Objektdaten aufgreifen und erzeugt aus diesen eine Kategorie des Objekts, beispielsweise ob es sich um das zu verfolgende Ziel handelt oder nicht. Auch diese Information wird am Datenbus 18 zur Verfügung gestellt.

Zu welchen Zeitpunkten die jeweilige Bearbeitung stattfindet, kann entsprechend der Aufgaben gewählt werden. Die Bildbearbeitungseinheiten 20, 22, 24 liefern ihr Ergebnis jeweils auf den Datenbus 18 und entsprechend einer vorgegebenen Bearbeitungsreihenfolge oder Bearbeitungsweise holen sich die anderen Bildbearbeitungseinheiten 20, 22, 24 die von Ihnen benötigten Daten vom Datenbus 18. Aus den Arbeitsergebnissen bereitet das Softwaremodul der Datenfusion DF das Hauptergebnis HE auf, das dem Autopiloten zur Verfügung gestellt wird.

Zur Erarbeitung von Steuerbefehlen für den Autopiloten im Hauptergebnis ist es notwendige, dass die Zeitspanne Δt vom Zeitpunkt t(N) bis zum Zeitpunkt der Bereitstellung der bearbeiteten Daten für den Autopilot bekannt ist. Zudem ist es vorteilhaft, wenn diese Zeitspanne Δt zwischen den beiden Zeitpunkten auch zu mehreren Bilddatensätzen B stets konstant ist. Denn so kann der Autopilot AP die Daten in regelmäßiger und verhältnismäßig einfacher Weise in Lenkbefehle umsetzen.

Damit die feste Zeitspanne Δt eingehalten wird, sorgt die Datenfusion DF dafür, dass ein Zeitfenster zur Bearbeitung aller zu einem Bilddatensatz gehörenden Daten rechtzeitig vor Ablauf der Zeitspanne Δt geschlossen wird, sodass der Datenfusion DF noch genügend Zeit zur Erarbeitung des Hauptergebnisses bleibt. Das Bearbeitungsfenster δt ist also kleiner als die Zeitspanne Δt.

Zu jedem Bilddatensatz B wartet die Datenfusion DF das Ende des Bearbeitungsfensters δt ab und schließt es dann. Das Bearbeitungsfenster δt ist nun geschlossen und die vorliegenden Daten können für den Autopiloten AP umgearbeitet werden. Das Schließen des Bearbeitungsfensters δt bedeutet, dass die Bearbeitung der Daten zu dem betreffenden Bilddatensatz B beendet ist. Für welche Bildbearbeitungseinheiten 20, 22, 24 dies gilt, kann jedoch gewählt werden. Im Beispiel aus FIG 3 wird das Bearbeitungsfenster δt für die Bildbearbeitungseinheiten 20 und 22 geschlossen, für die Bildbearbeitungseinheit 24 jedoch nicht, da die Ermittlung der Objektkategorie langwieriger sein kann, als das Bearbeitungsfenster δt Zeit zur Verfügung stellt. Da die Bildkategorie nicht von Aufnahme zu Aufnahme wechselt, kann die Bildkategorie von einer alten Aufnahme auch später noch verwendet werden.

Häufig kommt es vor, dass eine Aufnahme qualitativ so niedrig ist, dass nicht alle Arbeitsergebnisse am Ende eines Bearbeitungsfensters δt vorliegen oder sogar eine Ableitung von Lenkbefehlen nicht möglich ist. Dies ist in FIG 3 dargestellt.

FIG 3 zeigt ein Schema mit mehreren Verarbeitungstakten zu mehreren Bilddatensätzen B und daraus resultierenden Arbeitsergebnissen. Zu dem Bilddatensatz N können alle Bildbearbeitungseinheiten 20, 22, 24 erfolgreich ihre Arbeitsergebnisse errechnen. Dies ist in FIG 3 gezeigt, indem alle Arbeitsergebnisse mit einem "+" gekennzeichnet sind. Zum unmittelbar darauffolgenden Bilddatensatz N+1 können die beiden Bildbearbeitungseinheiten 20, 22 ihre Arbeitsergebnisse erfolgreich erarbeiten, für die Bildbearbeitungseinheit 24 reicht die Zeit oder die Daten jedoch nicht aus. Das Arbeitsergebnis liegt nicht oder nicht genügend vor, was in FIG 3 mit einem "-" gekennzeichnet ist.

Im dritten Bearbeitungsfenster δt, das zum Bilddatensatz N+2 gehört, kann noch nicht einmal die Low Level Function ihr Arbeitsergebnis ermitteln, beispielsweise weil das zuvor als Ziel erkannte Objekt in der zugehörigen Aufnahme nicht ausreichend gut abgebildet ist. Entsprechend kann auch die Medium Level Function keine Koordinaten ermitteln. Die High Level Function bearbeitet die Daten zu diesem Bilddatensatz gar nicht, beispielsweise weil sie von der Datenfusion DF angewiesen wurde, an der Kategorisierung zu einem früheren Bilddatensatz B weiterzurechnen, oder weil keine verwertbaren Low Level und/oder Medium Level Arbeitsergebnisse vorliegen. Dies ist in FIG 3 mit dem durchgestrichenen HLF gekennzeichnet. In dem darauffolgenden Bearbeitungsfenster δt zum Bilddatensatz N+3 liegen wieder alle Arbeitsergebnisse vor.

Wenn genügend Arbeitsergebnisse vorliegen, kann die Datenfusion DF daraus ein ausreichendes Hauptergebnis HE errechnen, wie aus FIG 3 zu sehen ist. Eine fehlende Kategorisierung kann immer noch zu einem Hauptergebnis (+) führen, aus dem Lenkbefehle ableitbar sind, weil das Objekt erkannt und dessen Koordinaten bekannt sind. Da es zuvor als Ziel klassifiziert wurde, wird diese Klassifizierung durch einen Zeitraum fehlender Klassifizierung beibehalten.

Kann kein Hauptergebnis HE ermittelt werden, kann wie folgt verfahren werden: Da die Taktung für den Autopiloten AP eingehalten werden sollte, wird diesem zum nicht erfolgreichen Takt die gleiche Information wie zum vorhergehenden Takt weitergegeben, sodass der Lenkflugkörper 2 sein momentanes Flugmanöver beispielsweise unverändert fortsetzt. Mit den nächsten erfolgreichen Arbeitsergebnissen kann der Kurs dann wieder korrigiert werden. Zu den entsprechenden Zeitpunkten t(N+i) + Δt, i = 0, 1, 2, ..., wird also das Hauptergebnis an den Autopiloten AP weitergegeben und wenn kein aktuelles Hauptergebnis vorliegt, das zuletzt gültige. Zu jedem Bilddatensatz B entscheidet die Datenfusion DF eigenständig, ob die Arbeitsergebnisse für die Steuerung des Autopiloten AP geeignet sind und wandelt sie bei einer entsprechenden Eignung für den Autopiloten um. Zum Schließzeitpunkt des Bearbeitungsfensters δt werden die vorliegenden Arbeitsergebnisse von der Datenfusion DF eingefroren und auf Verwendbarkeit hinsichtlich der Flugkörpersteuerung untersucht. Je nach Untersuchungsergebnis werden die Daten für den Autopiloten AP aufbereitet.

Die Datenfusion DF kann beim Schließen eines Fensters die entsprechende Schließinformation auf den Datenbus 18 geben, sodass die bearbeitenden Bildbearbeitungseinheiten 20, 22, 24 ihre Arbeit an dem entsprechenden Bilddatensatz B beenden. An welchem der mehreren gleichzeitig auf dem Datenbus 18 liegenden Bilddatensätze B innerhalb eines Bearbeitungsfensters δt die einzelnen Bildbearbeitungseinheiten 20, 22, 24 arbeiten, können diese selbstständig entscheiden.

Der Datenfusion DF kommt koordinierende Funktion zu. Sie öffnet und schließt nicht nur die Bearbeitungsfenster δt sondern kann auch die Tätigkeit der anderen Bildbearbeitungseinheiten 20, 22, 24 überwachen. Beispielsweise kann es nicht erfolgreiche Bildbearbeitungseinheiten 20, 22, 24 abschalten oder anderweitig steuern, um Rechenleistung freizubekommen. Denn die Hardware der einzelnen Bildbearbeitungseinheiten 20, 22, 24 muss nicht streng voneinander getrennt gesehen werden, die einzelnen Bildbearbeitungseinheiten 20, 22, 24 können auf einer gemeinsamen Hardware laufen, die die entsprechenden Ressourcen zur Verfügung stellt. Auch kann die Hardware in der Weise zugeordnet werden, wie die einzelnen Bildbearbeitungseinheiten 20, 22, 24 Ressourcen benötigen. Beispielsweise wird solchen Prozessen, die zwingend zur Steuerung des Autopiloten AP benötigt werden, mehr Hardware zugeordnet, damit sie auch bei schwieriger Bildlage auf jeden Fall Arbeitsergebnisse liefern.

Dieses neue System hat den Vorteil, dass die einzelnen Bildbearbeitungseinheiten 20, 22, 24 einfach ausgetauscht werden können ohne dass die Arbeit der anderen Da-Bildbearbeitungseinheiten 20, 22, 24 hierbei erheblich beeinflusst wäre. Die Modularität des Systems ist deutlich erhöht und Veränderungen können leicht vorgenommen werden.

Die Modularität kann für folgende Einsätze verwendet werden. Beispielsweise liegen einfache Bildbearbeitungseinheiten vor, die 2 × 2, 4 × 4 oder 8 × 8 usw. Bildpunkte zusammenfassen. Das von der Kamera 6 auf den Datenbus 18 gegebene Bild wird also immer unschärfer. Eine weitere Bildbearbeitungseinheit kann einen Laplace-Filter beinhalten, also einen Punkterkenner. Wird der Laplace-Filter auf ein einzelnes Pixel angewendet, so können sehr kleine Bildpunkte als solches erkannt werden. Der Flugkörper kann sehr weit entfernte Ziele erkennen. Wird jedoch der Laplace-Filter ausschließlich auf zusammengefasste Bildpunkte angewendet, beispielsweise nur auf 2 × 2 zusammengefasste Bildpunkte, so erkennt er einzelne signifikante Bildpunkte nicht, ist jedoch zuverlässiger in der Verfolgung näherer Ziele. Auf diese Weise kann ein Lenkflugkörper 2 mit einer Erkennung weiter oder kleiner Ziel und ein anderer Lenkflugkörper 2 mit einer guten Erkennung näherer oder größerer Ziele ausgestattet werden, beispielsweise entsprechend von Einsatzbeschreibungen für Lenkflugkörper 2. Diese Modularität ist sehr einfach herstellbar, da nur die entsprechende Bearbeitungseinheit eingefügt werden muss.

Das neue System hat den weiteren Vorteil, dass die übliche Taktung durch die Kamera 6 ebenfalls aufgebrochen werden kann. Beispielsweise wird ein Rückkopplungssensor R eingefügt, der beispielsweise eine asynchrone Rückkopplung liefert. Der Rückkopplungssensor R kann ein Belichtungsprüfer sein, der die Strahlungsmenge aus den Daten des Bilddatensatzes B prüft. Ist ein Bild zu dunkel oder hell gibt diese Helligkeitsregelung entsprechende Daten auf den Datenbus 18 zur Kamera 6, die die Integrationszeit ihres Sensors entsprechend verändern kann. Überschreitet die Integrationszeit die bisherige Taktung, kann die Taktung der Kamera 6 verlängert werden. Dies ist unkritisch, wenn hierdurch die Größe des Zeitfensters δt nicht verändert wird.

### Bezugszeichenliste

- 2: Lenkflugkörper
- 4: Suchkopf
- 6: Kamera
- 8: Optik
- 10: Matrixdetektor
- 12: Fenster
- 14: Flugkörpersteuereinheit
- 16: Steuerflügel
- 18: Datenbus
- 20: Bildbearbeitungseinheit
- 22: Bildbearbeitungseinheit
- 24: Bildbearbeitungseinheit
- B: Bilddatensatz
- AP: Autopilot
- DF: Datenfusion
- HE: Hauptergebnis
- R: Sensor

## Patentansprüche

1. Bildverarbeitungsverfahren zum Ermitteln von Lenkbefehlen für Steuerflügel (16) eines Lenkflugkörpers (2), bei dem
- eine Kamera (6) eine Umgebung aufnimmt, aus der Aufnahme einen Bilddatensatz (B) erzeugt und den Bilddatensatz (B) an einem Datenbus (18) zur Verfügung stellt,
- mehrere an den Datenbus (18) angeschlossene Bildbearbeitungseinheiten (20, 22, 24) an dem Datenbus (18) zur Verfügung stehende Daten bearbeiten und ihre Arbeitsergebnisse am Datenbus (18) zur Verfügung stellen, wobei es sich bei den Daten um den Bilddatensatz (B) oder ein aus dem Bilddatensatz (B) resultierendes Arbeitsergebnis einer der Bildbearbeitungseinheiten (20, 22, 24) oder um ein von einer der Bildverarbeitungseinheiten (20, 22, 24) aufgegriffenes, aus dem Bilddatensatz resultierendes und weiter bearbeitetes Arbeitsergebnis handelt.
- eine Datenfusion (DF) die Arbeitsergebnisse zu einem Hauptergebnis (HE) zusammenfasst,
- ein Autopilot (AP) aus dem Hauptergebnis (HE) Lenkbefehle für die Steuerflügel (16) berechnet,
- zu mehreren Aufnahmen jeweils ein Bilddatensatz (B) zur Verfügung gestellt wird,
**dadurch gekennzeichnet, dass**
- jeder Bilddatensatz (B) eine vorbestimmte und gleiche Zeitspanne zur Bearbeitung am Datenbus (18) zur Verfügung steht,
- die Datenfusion (DF) ein zeitliches Bearbeitungsfenster des Bilddatensatzes (B) und der daraus erarbeiteten Arbeitsergebnisse am Datenbus (18) für die Bildbearbeitungseinheiten (20,22) schließt, wobei das Schließen des Bearbeitungsfensters die Bearbeitung der Daten zu dem Bilddatensatz (B) und / oder zu einem daraus erarbeiteten Arbeitsergebnis nur für einen Teil der Bildbearbeitungseinheiten (20, 22) beendet, wohingegen zumindest eine der Bildbearbeitungseinheiten (24) die Bearbeitung an den Daten zu dem Bilddatensatz (B) und / oder zu einem daraus erarbeiteten Arbeitsergebnis fortsetzt, wobei aus den bis dahin vorliegenden Arbeitsergebnissen das Hauptergebnis (HE) erstellt und an den Autopiloten (AP) übergeben wird.

2. Verfahren nach Anspruch 1,
**dadurch gekennzeichnet,**
**dass** die Arbeitsergebnisse ein aus dem Bilddatensatz (B) extrahiertes Objekt, die Koordinaten des Objekts und/oder eine Klassifikation des Objekts enthalten.

3. Verfahren nach Anspruch 1 oder 2,
**dadurch gekennzeichnet,**
**dass** die Datenfusion (DF) zu mehreren Bilddatensätzen (B) das Hauptergebnis (HE) nach der stets gleichen Zeitspanne (Δt) nach der Aufnahme an den Autopiloten (AP) weiterleitet.

4. Verfahren nach einem der vorhergehenden Ansprüche,
**dadurch gekennzeichnet,**
**dass** die Datenfusion (DF) zu mehreren Bilddatensätzen (B) das Hauptergebnis (HE) regelmäßig getaktet an den Autopiloten (AP) weiterleitet.

5. Verfahren nach einem der vorhergehenden Ansprüche,
**dadurch gekennzeichnet,**
**dass** alle Bildbearbeitungseinheiten (20, 22, 24) Zugriff sowohl auf den Bilddatensatz (B) als auch auf die von anderen Bildbearbeitungseinheiten (20, 22, 24) bereitgestellten Arbeitsergebnisse haben.

6. Verfahren nach einem der vorhergehenden Ansprüche,
**dadurch gekennzeichnet,**
**dass** jeder Bilddatensatz (B) eine eindeutige Identifikationskennzeichnung enthält.

7. Verfahren nach einem der vorhergehenden Ansprüche,
**dadurch gekennzeichnet,**
**dass** die Datenfusion (DF) nach dem Schließen eines Bearbeitungsfensters prüft, ob die Arbeitsergebnisse zu einem Bilddatensatz (B) ausreichen, um vordefiniert genügende Lenkbefehle abzuleiten, und bei negativem Prüfungsergebnis die Arbeitsergebnisse verwirft.

8. Verfahren nach einem der vorhergehenden Ansprüche,
**dadurch gekennzeichnet,**
**dass** die Datenfusion (DF) die Arbeitsergebnisse auf Güte prüft und den auf einer gemeinsamen Hardware laufenden Bildbearbeitungseinheiten (20, 22, 24) anhand der Güte Hardwareressourcen zuteilt, wobei die Hardware in der Weise zugeordnet wird, wie die einzelnen Bildbearbeitungseinheiten (20, 22, 24) Ressourcen benötigen.

9. Verfahren nach einem der vorhergehenden Ansprüche,
**dadurch gekennzeichnet,**
**dass** die Integrationszeit der Kamera (6) für die Aufnahmen unter Verwendung eines Belichtungsprüfers gesteuert wird, der die Bilddaten auswertet.

10. Flugkörpersteuereinheit (14) für einen Lenkflugkörper (2), mit
- einer Kamera (6),
- einem mit der Kamera (6) verbundenen Datenbus (18),
- mehreren Bildbearbeitungseinheiten (20, 22, 24) am Datenbus (18),
- einer Datenfusion (DF) und einem Autopiloten (AP),
wobei
- die Kamera (6) dazu vorbereitet ist, eine Umgebung aufzunehmen, aus der Aufnahme einen Bilddatensatz (B) zu erzeugen und den Bilddatensatz (B) am Datenbus (18) zur Verfügung zu stellen,
- die Bildbearbeitungseinheiten (20, 22, 24) dazu vorbereitet sind, an dem Datenbus (B) zur Verfügung stehende Daten zu bearbeiten und die Arbeitsergebnisse am Datenbus (18) zur Verfügung zu stellen, wobei es sich bei den Daten um den Bilddatensatz oder ein aus dem Bilddatensatz (B) resultierendes Arbeitsergebnis einer der Bildbearbeitungseinheiten (20, 22, 24) oder um ein von einer der Bildverarbeitungseinheiten (20, 22, 24) aufgegriffenes, aus dem Bilddatensatz resultierendes und weiter bearbeitetes Arbeitsergebnis handelt,
- die Datenfusion (DF) dazu vorbereitet ist, die Arbeitsergebnisse zu einem Hauptergebnis (HE) zusammenzufassen, und
- der Autopilot (AP) dazu vorbereitet ist, aus dem Hauptergebnis (HE) Lenkbefehle für Steuerflügel (16) des Lenkflugkörpers (2) zu berechnen
**dadurch gekennzeichnet, dass**
- die Datenfusion (DF) dazu vorbereitet ist, nach Ende einer vorbestimmten und gleichen Zeitspanne, die einem jeweiligen Bilddatensatz mehrerer Aufnahmen zur Bearbeitung am Datenbus zur Verfügung steht, ein zeitliches Bearbeitungsfenster des Bilddatensatzes (B) und der daraus erarbeiteten Arbeitsergebnisse am Datenbus (18) für die Bildbearbeitungseinheiten (20,22) zu schließen, wobei das Schließen des Bearbeitungsfensters die Bearbeitung der Daten zu dem Bilddatensatz (B) und/oder zu einem daraus erarbeiteten Arbeitsergebnis nur für einen Teil der Bildbearbeitungseinheiten (20, 22) beendet, wohingegen zumindest eine der Bildbearbeitungseinheiten (24) die Bearbeitung an den Daten zu dem Bilddatensatz (B) und / oder zu einem daraus erarbeiteten Arbeitsergebnis fortsetzt, und
- die Datenfusion (DF) dazu vorbereitet ist, nach einem solchen Schließen des Bearbeitungsfensters aus den bis dahin vorliegenden Arbeitsergebnissen das Hauptergebnis (HE) zu erstellen und an den Autopiloten (AP) zu übergeben.

11. Flugkörpersteuerungssystem mit zumindest zwei Flugkörpersteuerungseinheiten (14) nach Anspruch 10,
**dadurch gekennzeichnet,**
**dass** die beiden Flugkörpersteuerungseinheiten (14) hinsichtlich Kamera (6), Datenbus (18), Datenfusion (DF) und Autopilot (AP) identisch sind und sich in zumindest einer Bildbearbeitungseinheit (20, 22, 24) hinsichtlich der Anforderungen an die Auswertung der Bilddatensätze (B) voneinander unterscheiden.

## Claims

1. Image processing method for determining steering commands for control fins (16) of a guided missile (2), in which
- a camera (6) records an environment, generates an image data set (B) from the recording and makes the image data set (B) available on a data bus (18),
- a plurality of image processing units (20, 22, 24) connected to the data bus (18) process data available on the data bus (18) and make their working results available on the data bus (18), wherein the data are the image data set (B) or a working result of one of the image processing units (20, 22, 24) that results from the image data set (B) or a working result that is captured by one of the image processing units (20, 22, 24), results from the image data set and is processed further,
- a data fusion (DF) combines the working results to form a main result (HE),
- an autopilot (AP) calculates steering commands for the control fins (16) from the main result (HE),
- one image data set (B) is made available for a plurality of recordings,
**characterized in that**
- each image data set (B) is available for a predetermined and equal time period for processing on the data bus (18),
- the data fusion (DF) closes a temporal processing window for the image data set (B) and the resulting working results on the data bus (18) for the image processing units (20, 22), wherein the closing of the processing window ends the processing of the data for the image data set (B) and/or for a resulting working result only for some of the image processing units (20, 22), whereas at least one of the image processing units (24) continues the processing of the data for the image data set (B) and/or for a resulting working result, wherein the main result (HE) is created from the previously available working results and is transferred to the autopilot (AP).

2. Method according to Claim 1,
**characterized**
**in that** the working results contain an object extracted from the image data set (B), the coordinates of the object and/or a classification of the object.

3. Method according to Claim 1 or 2,
**characterized**
**in that** the data fusion (DF) for a plurality of image data sets (B) forwards the main result (HE) to the autopilot (AP) after always the same time period (Δt) after the recording.

4. Method according to one of the preceding claims,
**characterized**
**in that** the data fusion (DF) for a plurality of image data sets (B) regularly forwards the main result (HE) to the autopilot (AP) in a clocked fashion.

5. Method according to one of the preceding claims,
**characterized**
**in that** all image processing units (20, 22, 24) have access to both the image data set (B) and the working results provided by other image processing units (20, 22, 24).

6. Method according to one of the preceding claims,
**characterized**
**in that** each image data set (B) contains a unique identification tag.

7. Method according to one of the preceding claims,
**characterized**
**in that**, after closing a processing window, the data fusion (DF) checks whether the working results for an image data set (B) are sufficient to derive predefined sufficient steering commands, and, if the check result is negative, discards the working results.

8. Method according to one of the preceding claims,
**characterized**
**in that** the data fusion (DF) checks the working results for quality and allocates hardware resources to the image processing units (20, 22, 24) running on common hardware based on the quality, wherein the hardware is allocated in the manner in which the individual image processing units (20, 22, 24) require resources.

9. Method according to one of the preceding claims,
**characterized**
**in that** the integration time of the camera (6) for the recordings is controlled using an exposure tester that evaluates the image data.

10. Missile control unit (14) for a guided missile (2), having
- a camera (6),
- a data bus (18) connected to the camera (6),
- a plurality of image processing units (20, 22, 24) on the data bus (18),
- a data fusion (DF) and an autopilot (AP),
wherein
- the camera (6) is prepared to record an environment, to generate an image data set (B) from the recording and to make the image data set (B) available on the data bus (18),
- the image processing units (20, 22, 24) are prepared to process data available on the data bus (B) and to make the working results available on the data bus (18), wherein the data are the image data set or a working result of one of the image processing units (20, 22, 24) that results from the image data set (B) or a working result that is captured by one of the image processing units (20, 22, 24), results from the image data set and is processed further,
- the data fusion (DF) is prepared to combine the working results to form a main result (HE), and
- the autopilot (AP) is prepared to calculate steering commands for control fins (16) of the guided missile (2) from the main result (HE),
**characterized in that**
- the data fusion (DF) is prepared, after the end of a predetermined and equal time period which is available to a respective image data set of a plurality of recordings for processing on the data bus, to close a temporal processing window for the image data set (B) and the resulting working results on the data bus (18) for the image processing units (20, 22), wherein the closing of the processing window ends the processing of the data for the image data set (B) and/or for a resulting working result only for some of the image processing units (20, 22), whereas at least one of the image processing units (24) continues the processing of the data for the image data set (B) and/or for a resulting working result, and
- the data fusion (DF) is prepared to create the main result (HE) from the previously available working results and to transfer it to the autopilot (AP) after such closing of the processing window.

11. Missile control system having at least two missile control units (14) according to Claim 10,
**characterized**
**in that** the two missile control units (14) are identical with regard to the camera (6), data bus (18), data fusion (DF) and autopilot (AP) and differ from each other in at least one image processing unit (20, 22, 24) with regard to the requirements for the evaluation of the image data sets (B).

## Revendications

1. Procédé de traitement d'image pour déterminer des instructions de guidage pour des ailes de commande (16) d'un missile guidé (2), dans lequel
- une caméra (6) enregistre un environnement, génère un ensemble de données d'image (B) à partir de l'enregistrement et fournit l'ensemble de données d'image (B) à un bus de données (18),
- plusieurs unités de traitement d'image (20, 22, 24) raccordées au bus de données (18) traitent des données disponibles sur le bus de données (18) et fournissent leurs résultats de travail au bus de données (18), les données étant l'ensemble de données d'image (B) ou un résultat de travail d'une des unités de traitement d'image (20, 22, 24) résultant de l'ensemble de données d'image (B) ou un résultat de travail capturé par une des unités de traitement d'image (20, 22, 24), résultant de l'ensemble de données d'image et traité ultérieurement,
- une fusion de données (DF) regroupe les résultats de travail pour former un résultat principal (HE),
- un pilote automatique (AP) calcule des instructions de guidage des ailes de commande (16) à partir du résultat principal (HE),
- un ensemble de données d'image (B) est fourni respectivement en plusieurs enregistrements,
**caractérisé en ce que**
- chaque ensemble de données d'image (B) fournit une durée prédéfinie et identique pour le traitement sur le bus de données (18),
- la fusion de données (DF) ferme une fenêtre de traitement temporelle de l'ensemble de données d'image (B) et des résultats de travail obtenus à partir de ceux-ci sur le bus de données (18) pour les unités de traitement d'image (20, 22), la fermeture de la fenêtre de traitement ne mettant fin au traitement des données relatives à l'ensemble de données d'image (B) et/ou à un résultat de travail obtenu à partir de celui-ci que pour une partie des unités de traitement d'image (20, 22), tandis qu'au moins une des unités de traitement d'image (24) poursuit le traitement des données relatives à l'ensemble de données d'image (B) et/ou à un résultat de travail obtenu à partir de celui-ci, le résultat principal (HE) étant créé à partir des résultats de travail disponibles jusqu'à présent et étant transféré au pilote automatique (AP)

2. Procédé selon la revendication 1,
**caractérisé en ce**
**que** les résultats de travail contiennent un objet extrait de l'ensemble de données d'image (B), les coordonnées de l'objet et/ou une classification de l'objet.

3. Procédé selon la revendication 1 ou 2,
**caractérisé en ce**
**que** la fusion de données (DF) pour former plusieurs ensembles de données d'image (B) transfère le résultat principal (HE) au pilote automatique (AP) après la période de temps (Δt) toujours identique après l'enregistrement.

4. Procédé selon l'une des revendications précédentes, **caractérisé en ce**
**que** la fusion de données (DF) pour former plusieurs ensembles de données d'image (B) transfère le résultat principal (HE) au pilote automatique (AP) de manière cadencée régulièrement.

5. Procédé selon l'une des revendications précédentes, **caractérisé en ce**
**que** toutes les unités de traitement d'image (20, 22, 24) ont accès à la fois à l'ensemble de données d'image (B) et aux résultats de travail fournis par d'autres unités de traitement d'image (20, 22, 24).

6. Procédé selon l'une des revendications précédentes, **caractérisé en ce**
**que** chaque ensemble de données d'image (B) contient un marquage d'identification unique.

7. Procédé selon l'une des revendications précédentes, **caractérisé en ce**
**que**, après la fermeture d'une fenêtre de traitement, la fusion de données (DF) vérifie si les résultats de travail pour un ensemble de données d'image (B) sont suffisants pour déduire des instructions de guidage prédéfinies suffisantes et, en cas de résultat de contrôle négatif, rejette les résultats de travail.

8. Procédé selon l'une des revendications précédentes, **caractérisé en ce**
**que** la fusion de données (DF) vérifie la qualité des résultats de travail et attribue des ressources matérielles aux unités de traitement d'image (20, 22, 24) fonctionnant sur un matériel commun en fonction de la qualité, le matériel étant attribué de la manière dont les unités de traitement d'image (20, 22, 24) individuelles nécessitent des ressources.

9. Procédé selon l'une des revendications précédentes, **caractérisé en ce**
**que** le temps d'intégration de la caméra (6) pour les enregistrements est commandé en utilisant un testeur d'exposition qui évalue les données d'image.

10. Unité de commande (14) de missile pour un missile guidé (2), avec
- une caméra (6),
- un bus de données (18) relié à la caméra (6),
- plusieurs d'unités de traitement d'image (20, 22, 24) sur le bus de données (18),
- une fusion de données (DF) et un pilote automatique (AP),
- la caméra (6) étant prête à enregistrer un environnement, à générer un ensemble de données d'image (B) à partir de l'enregistrement et à fournir l'ensemble de données d'image (B) sur le bus de données (18),
- les unités de traitement d'image (20, 22, 24) étant prêtes pour traiter des données disponibles sur le bus de données (B) et pour fournir les résultats de travail sur le bus de données (18), les données étant l'ensemble de données d'image ou un résultat de travail d'une des unités de traitement d'image (20, 22, 24) résultant de l'ensemble de données d'image (B) ou un résultat de travail capturé par une des unités de traitement d'image (20, 22, 24), résultant de l'ensemble de données d'image et traité ultérieurement,
- la fusion de données (DF) étant prête pour regrouper les résultats de travail pour former un résultat principal (HE), et
- le pilote automatique (AP) étant prêt pour calculer des instructions de guidage pour des ailes de commande (16) du missile guidé (2) à partir du résultat principal (HE)
**caractérisé en ce que**
- la fusion de données (DF) est prête pour fermer, après la fin d'un laps de temps prédéfini et identique qui est disponible pour un ensemble de données d'image respectif de plusieurs enregistrements à traiter sur le bus de données, une fenêtre de traitement temporelle de l'ensemble de données d'image (B) et des résultats de travail obtenus à partir celui-ci sur le bus de données (18) pour les unités de traitement d'image (20, 22), la fermeture de la fenêtre de traitement ne mettant fin au traitement des données relatives à l'ensemble de données d'image (B) et/ou à un résultat de travail obtenu à partir de celui-ci que pour une partie des unités de traitement d'image (20, 22), tandis qu'au moins une des unités de traitement d'image (24) poursuit le traitement des données relatives à l'ensemble de données d'image (B) et/ou à un résultat de travail obtenu à partir de celui-ci, et
- la fusion de données (DF) est prête pour créer, après une telle fermeture de la fenêtre de traitement, le résultat principal (HE) à partir des résultats de travail disponibles jusqu'à présent et pour le transférer au pilote automatique (AP).

11. Système de commande de missile avec au moins deux unités de commande (14) de missile selon la revendication 10,
**caractérisé en ce**
**que** les deux unités de commande (14) de missile sont identiques en ce qui concerne la caméra (6), le bus de données (18), la fusion de données (DF) et le pilote automatique (AP) et diffèrent l'une de l'autre dans au moins une unité de traitement d'image (20, 22, 24) en ce qui concerne les exigences pour l'évaluation des ensembles de données d'image (B).
